# EUROPEAN PATENT APPLICATION

(11) **EP 4 541 852 A1**
(43) Date of publication of application: **23.04.2025**
(21) Application number: 23823911.5
(22) Date of filing: 13.06.2023
(51) Int. Cl.: C08L 63/00, C08K 3/08, C08K 7/00

(54) **ELECTRICALLY CONDUCTIVE RESIN COMPOSITION AND CURED PRODUCT THEREOF**

(30) Priority: 14.06.2022 JP 2022095628
(71) Applicant: ThreeBond Co., Ltd., Tokyo 192-0398 (JP)
(72) Inventor: SUZUKI, Takashi, Hachioji-shi, Tokyo 192-0398 (JP); MORIMOTO, Kosuke, Hachioji-shi, Tokyo 192-0398 (JP); NODA, Nagisa, Hachioji-shi, Tokyo 192-0398 (JP)
(74) Representative: Crow, Martin
(86) International application number: PCT/JP2023/021848
(87) International publication number: WO 2023/243621

(57) **Abstract**

An object of the invention is to provide an electrically conductive resin composition that cures at normal temperature (5 to 50°C), and the cured product thereof having excellent electrical conductivity. An electrically conductive resin composition includes an epoxy resin as component (A), an electrically conductive spike-shaped filler as component (B), and a curing agent for epoxy resin as component (C).

## Description

### TECHNICAL FIELD

The present invention relates to an electrically conductive resin composition and a cured product thereof.

### BACKGROUND ART

Although conventional electrically conductive heat-curable epoxy adhesives are widely used in production of electrical and electronic components due to excellence in adhesion and heat resistance, heating to high temperature of at least about 150°C is required to exhibit excellent electrical conductivity.

### CITATION LIST

### PATENT LITERATURE

Patent Literature 1
Japanese Patent Laid-Open No. 2010-037389

### SUMMARY OF INVENTION

However, in recent years, the development of energy-saving lines to eliminate processes with a heat source has been progressing in production sites for electronic components, etc., so that the electrically conductive heat-curable epoxy adhesives cannot be applied.

The present invention has been made in view of the situation described above, and an object of the invention is to provide an electrically conductive resin composition which cures at normal temperature (5 to 50°C) and a cured product thereof has excellent electrical conductivity.

The gist of the present invention is described as follows.
[1] An electrically conductive resin composition containing: an epoxy resin as component (A), a spike-shaped electrically conductive filler as component (B); and a curing agent for epoxy resin as component (C).
[2] The electrically conductive resin composition according to [1], wherein the composition consists of the following agent A and agent B:
   agent A: a composition containing the epoxy resin as component (A) and the spike-shaped electrically conductive filler as component (B); and
   agent B: a composition containing the curing agent for epoxy resin as component (C).
[3] The electrically conductive resin composition according to [1] or [2], wherein the component (B) is a spike-shaped nickel filler.
[4] The electrically conductive resin composition according to any one of [1] to [3], wherein the component (A) contains at least a glycidylamine resin.
[5] The electrically conductive resin composition according to any one of [1] to [4], further containing a polyfunctional radically polymerizable compound as component (D).
[6] The electrically conductive resin composition according to any one of [1] to [5], wherein the component (C) is in a liquid state at 25°C.
[7] The electrically conductive resin composition according to any one of [1] to [6], containing no peroxide.
[8] The electrically conductive resin composition according to any one of [1] to [7], wherein 100 to 1000 parts by mass of the component (B) is contained relative to 100 parts by mass of the component (A).
[9] A cured product obtained by curing the electrically conductive resin composition according to any one of [1] to [8].

### DESCRIPTION OF EMBODIMENTS

The details of the invention are described as follows. In the present specification, an expression "X to Y" is used to include the numerical values at the front and rear of the expression (X and Y) as lower limit and upper limit, or meaning "X or more and Y or less".

The electrically conductive resin composition according to an embodiment of the present invention is an electrically conductive resin composition including an epoxy resin as component (A), an electrically conductive spike-shaped filler as component (B), and a curing agent for epoxy resin as component (C). The electrically conductive resin composition according to the present invention cures at normal temperature (5 to 50°C), and the cured product thereof is able to have excellent electrical conductivity.

### <Component (A)>

Component (A) for use in the present invention is usable without particular limitation as long as it is an epoxy resin. Examples of component (A) include epoxy resin (a1) having 2 or more and less than 3 (preferably 2) epoxy groups in one molecule and polyfunctional epoxy resin (a2) having 3 or more and less than 10 (preferably 3 or more and 9 or less) epoxy groups in one molecule. In the present invention, component (A) may include a combination of component (a1) and component (a2). Incidentally, in the case where the electrically conductive resin composition contains two or more types of components (A) (for example, (a1) and (a2)), the content of components (A) means the total amount thereof. Further, the adhesion imparting agent described below is not included in component (A) and is treated as an optional component.

Although component (A) may be used in either a liquid or solid state at 25°C, a liquid state at 25°C is preferred from the viewpoint of obtaining handling properties. Note that handling properties mean that the electrically conductive resin composition has a low viscosity to achieve easy applicability. In the present specification, a substance in a liquid state has a viscosity of 0.01 mPa·s to 1000 Pa·s as measured with a cone-plate viscometer at 25°C.

The component (a1) is not particularly limited, and examples thereof include bisphenol type epoxy resins such as bisphenol A type epoxy resins, bisphenol F type epoxy resins, bisphenol S type epoxy resins, and bisphenol AD type epoxy resins, hydrogenated bisphenol type epoxy resins, alkylene glycol type epoxy resins such as 1,2-butanediol diglycidyl ether, 1,3-butanediol diglycidyl ether, 1,4-butanediol diglycidyl ether, ethylene glycol diglycidyl ether, propylene glycol diglycidyl ether, 2,3-butanediol diglycidyl ether, 1,5-pentanediol diglycidyl ether, 1,6-hexanediol diglycidyl ether, neopentyl glycol diglycidyl ether, and 1,4-cyclohexane dimethanol diglycidyl ether, and glycidylamine resins such as N,N-bis(2,3-epoxypropyl) -o-toluidine. These components (a1) may be used alone or in combination of two or more. Among these, from the viewpoint of excellent curability at normal temperature and excellent electrical conductivity, component (a1) preferably contains a bisphenol type epoxy resin, and more preferably contains both of a bisphenol A type epoxy resin and a bisphenol F type epoxy resin. Moreover, from the viewpoint of excellent curability at normal temperature, component (a1) preferably contains a glycidylamine resin, and more preferably contains both of a bisphenol-type epoxy resin and a glycidylamine resin. Containing the component (a1) allows an electrically conductive resin composition to be cured at normal temperature more easily and the cured products thereof to have excellent electrical conductivity. Further, component (a1) preferably contains a bifunctional bisphenol type epoxy resin, more preferably contains a bifunctional bisphenol A type epoxy resin and a bifunctional bisphenol F type epoxy resin, and particularly preferably contains a bifunctional bisphenol A type epoxy resin, a bifunctional bisphenol F type epoxy resin and a bifunctional glycidylamine resin.

In the case where component (a1) contains a bisphenol A type epoxy resin and a bisphenol F type epoxy resin, the ratio between the bisphenol A type epoxy resin (in the case where two or more types are included, the total thereof) and the bisphenol F type epoxy resin (in the case where two or more types are included, the total thereof) in the component (a1) is not particularly limited. The content of the bisphenol F type epoxy resin is, for example, 10 to 300 parts by mass, more preferably 30 to 200 parts by mass, and particularly preferably 50 to 150 parts by mass, relative to 100 parts by mass of the bisphenol A type epoxy resin.

In the case where component (a1) contains a bisphenol type epoxy resin and a glycidylamine resin, the mass ratio between the bisphenol-type epoxy resin (in the case where two or more types are included, the total thereof) and the glycidylamine resin (in the case where two or more types are included, the total thereof) in the component (a1) is not particularly limited. The content of the glycidylamine resin is, for example, 10 to 200 parts by mass, more preferably 20 to 150 parts by mass, and particularly preferably 30 to 120 parts by mass, relative to 100 parts by mass of the bisphenol type epoxy resin.

The component (a2) is not particularly limited, and examples thereof include novolac type epoxy resins such as phenol novolac type epoxy resins and cresol novolac type epoxy resins; glycidylamine compounds such as N,N-diglycidyl-4-glycidyloxyaniline, 4,4'-methylenebis(N,N-diglycidylaniline), tetraglycidyl diaminodiphenylmethane, and tetraglycidyl-m-xylylenediamine; naphthalene type epoxy resins having four glycidyl groups; and glycidylamine resins such as triglycidyl-p-aminophenol. These components (a2) may be used alone or in combination of two or more.

Here, as component (a2), a polyfunctional epoxy resin having 3 or more and less than 9 (or 3 or more and 8 or less) epoxy groups in one molecule is preferable, a polyfunctional epoxy resin having 3 or more and less than 8 (or 3 or more and 7 or less) epoxy groups in one molecule is more preferable, a polyfunctional epoxy resin having 3 or more and less than 7 (or 3 or more and 6 or less) epoxy groups in one molecule is still more preferable, a polyfunctional epoxy resin having 3 or more and less than 6 (or 3 or more and 5 or less) epoxy groups in one molecule is particularly preferable, and a polyfunctional epoxy resin having 3 epoxy groups in one molecule is most preferable.

In the case where component (A) includes components (a1) and (a2), the mass ratio ((a1)/(a2)) between the component (a1) and the component (a2) is not particularly limited, and is preferably in the range of 20/80 to 90/10, more preferably in the range of 30/70 to 85/15, still more preferably in the range of 40/60 to 80/20, and particularly preferably in the range of 50/50 to 70/30. With the mass ratio set in range, an electrically conductive resin composition which cures at normal temperature more easily and a cured product thereof having excellent electrical conductivity can be obtained.

Commercial products of component (A) are not particularly limited, and examples thereof include jER (registered trademark) 828, 827, 1001, 801, 806, 807, 152, 604, 630, 871, YX8000, YX8034 and YX4000 (the above are manufactured by Mitsubishi Chemical Corporation); Epicron 830, 850, 830LVP, 850CRP, 835LV, HP4032D, 703, 720, 726 and 820 (the above are manufactured by DIC Corporation); EP4100, EP4000, EP4080, EP4085, EP4088, EPU6, EPU7N, EPR4023, EPR1309 and EP4920 (the above are manufactured by ADEKA Corporation), TEPIC (registered trademark) (the above is manufactured by Nissan Chemical Corporation); KF-101, KF-1001, KF-105, X-22-163B and X-22-9002 (the above are manufactured by Shin-Etsu Chemical Co., Ltd.); DENACOL (registered trademark) EX411, 314, 201, 212 and 252 (the above are manufactured by Nagase ChemteX Corporation); DER-331, 332, 334, 431 and 542 (the above are manufactured by Dow Chemical Co.); YH-434 and YH-434L (the above are manufactured by NIPPON STEEL Chemical & Material Co., Ltd.); and GOT (the above is manufactured by Nippon Kayaku Co., Ltd.).

### <Component (B)>

The electrically spike-shaped conductive filler as component (B) of the present invention may be combined with component (A) and component (C) of the present invention to form an electrically conductive resin composition that cures at normal temperature and has excellent electrical conductivity. Examples of the component (B) include powder of metal such as nickel, gold, platinum, silver, copper, and palladium, alloys such as solder made by combining multiple types thereof, organic polymer particles, and plated metal particles coated with a thin film of another metal. These components (B) may be used alone or in combination of two or more. Incidentally, in the case where the electrically conductive resin composition contains two or more types of components (B), the content of component (B) means the total thereof. In particular, from the viewpoint of achieving a low resistance, gold, silver, copper, and nickel are preferable as component (B). Nickel is particularly preferable as component (B). Here, the term "spike-shape" refers to a primary particle having sharp protrusions on the surface. More specifically, one particle has multiple conical protrusions (usually 3 to 500 pieces) with a height of 1/3 to 1/50 of the particle size. Also, component (B) may be surface-treated with a lubricant. As the lubricant, a saturated fatty acid and/or an unsaturated fatty acid may be used. Examples of the lubricant include capric acid, undecylic acid, lauric acid, tridecylic acid, myristic acid, pentadecylic acid, palmitic acid, margaric acid, stearic acid, linolenic acid, linoleic acid, palmitoleic acid, and oleic acid. These lubricants may be used alone or in combination of two or more.

The average particle size of the component (B) is, for example, 0.01 to 150 µm, preferably 0.1 to 50 µm, and particularly preferably 1 to 13 µm, though not particularly limited. With an average particle size in the range, an electrically conductive resin composition having a better conductivity can be preferably obtained. The average particle size is the particle size (D50) at a cumulative volume ratio of 50% in the particle size distribution determined by laser diffraction scattering method. As an example, the average particle size is measured by a laser diffraction scattering type shape distribution measuring device. The apparent density of the component (B) is, for example, 0.5 to 10 g/cm³, preferably 1.0 to 5.0 g/cm³, particularly preferably 1.5 to 3.5 g/cm³, though not particularly limited. With an apparent density in the range, an electrically conductive resin composition having a better conductivity can be preferably obtained. The test method for the apparent density is according to JIS Z 2504:2020.

The content of component (B) in the entire electrically conductive resin composition is, for example, 10 to 95 mass%, preferably 30 to 90 mass%, more preferably 50 to 85 mass%, particularly preferably 70 to 82 mass%, though not particularly limited. With a content in the range, an electrically conductive resin composition that cures at normal temperature and has excellent electrical conductivity can be obtained more easily. Further, the content of the component (B) is 100 to 1000 parts by mass, more preferably 200 to 900 parts by mass, and particularly preferably 300 to 700 parts by mass, relative to 100 parts by mass of the component (A). With a content in the range, an electrically conductive resin composition that cures at normal temperature and has excellent electrical conductivity can be obtained more easily.

The component (B) may be obtained on the market. For example, Ni powder type 123 manufactured by Vale may be used.

### <Component (C)>

Component (C) for use in the present invention is a curing agent for epoxy resins. From the viewpoint of curability at normal temperature, component (C) is preferably an amine compound in a liquid state at 25°C. Specific examples of component (C) include aliphatic polyamines, alicyclic polyamines, aromatic polyamines, secondary amines, tertiary amines, polyamidoamines, and amine compounds with a modified amine group at an end of polymers. The components (C) may be used alone or in combination of two or more. From the viewpoint of obtaining an electrically conductive resin composition that cures at normal temperature and has excellent electrical conductivity, component (C) preferably contains an amine compound having an amine value of 400 KOHmg/g or more, and more preferably contains only a curing agent selected from an amine compound having an amine value of 400 KOHmg/g or more and tertiary amines. Incidentally, in the case where the electrically conductive resin composition contains two or more types of components (C), the content of components (C) means the total thereof. Further, the adhesion imparting agent described below is not included in component (C) and is treated as an optional component.

Specific examples of aliphatic polyamines include ethylenediamine, diethylenetriamine, triethylenetetramine, hexamethylenediamine, though not limited thereto. Specific examples of alicyclic polyamines include mensenediamine (MDA), isophoronediamine (IPDA), N-aminoethylpiperazine (N-AEP), diaminodicyclohexylmethane, and norbornanediamine (NBDA), though not limited thereto. Specific examples of aromatic polyamines include metaxylylenediamine (MXDA), metaphenylenediamine, diaminodiphenylmethane, diaminodiphenylsulfone, diaminodiethyldiphenylmethane, though not limited thereto. Specific examples of secondary amines or tertiary amines include piperidine, pyridine, benzyldimethylamine, dimethylaminomethyl phenol, 2,4,6-tris(dimethylaminomethyl)phenol, triethylenediamine, dimethylcyclohexylamine, dimethylbenzylamine, dimethylhexylamine, dimethylamino phenol, dimethylamino p-cresol, 1,4-diazadicyclo[2.2.2]octane, and 1,8-diazabicyclo[5.4.0]undecene-1, though not limited thereto. Specific examples of amine compounds with a modified amine group at a terminal of polymers include amine group-terminated butadiene/acrylonitrile copolymers, amine group-terminated (meth)acrylic (co)polymers, amine group-terminated polyether polymers, and amine group-terminated polyester polymers, though not limited thereto. Component (C) preferably contains a tertiary amine, because an electrically conductive resin composition that cures at normal temperature and has excellent electrical conductivity can be obtained more easily. Examples of the tertiary amine include 2,4,6-tris(dimethylaminomethyl)phenol and dimethylaminomethyl phenol, and 2,4,6-tris(dimethylaminomethyl)phenol is most preferred.

Commercial products of the (C) include ANCAMINE 1110, ANCAMINE K54, ANCAMINE K618 and ANKAMIN 2709 manufactured by EVONIC, Fujicure (registered trademark) 4011, 4025, 4030, 7000, 7001, 7002, and 8121, Tohmide 235-A and 235-R, manufactured by T&K TOKA Corporation, EH-451N manufactured by ADEKA Corporation, Hypro ATBN 1300X16 manufactured by Huntsman Corporation, and ST11, ST12, ST14, ST15 and LV11 manufactured by Mitsubishi Chemical Corporation.

In the case where two or more of the components (C) are included, from the viewpoint of excellent curability at normal temperature, the mass ratio between respective components (C), i.e., (alicyclic polyamine): (aliphatic polyamine), is preferably 20:80 to 80:20, more preferably 30:70 to 70:30. The ratio (aliphatic polyamine): (polyamidoamine) is preferably 95:5 to 50:50, more preferably 90:10 to 70:30. The ratio (polyamide amine) : (amine compound with modified amine group at a terminal of polymers) is preferably 90:10 to 20:80, more preferably 80:20 to 50:50. Further, the content of tertiary amine is preferably 1 to 20 mass%, more preferably 2 to 10 mass%, and most preferably 3 to 10 mass%, relative to the whole of components (C), from the viewpoint of excellent curability at normal temperature.

The amount (content) of the component (C) contained is preferably 5 to 200 parts by mass, more preferably 10 to 150 parts by mass, and most preferably 20 to 110 parts by mass, relative to 100 parts by mass of (A). With a content in the range, an electrically conductive resin composition that cures at normal temperature and has excellent electrical conductivity can be obtained more easily.

### <Component (D)>

The electrically conductive resin composition of the present invention may further contain a polyfunctional radically polymerizable compound as component (D). The polyfunctional radically polymerizable compound as component (D) for use in the present invention is not particularly limited as long as it is a compound having two or more radically polymerizable functional groups in the molecule. By using component (D) in combination with components (A) to (C) of the present invention, an electrically conductive resin composition that cures at normal temperature and has excellent electrical conductivity may be provided more easily. The radical polymerizable functional group of component (D) is not particularly limited, and examples thereof include ethylenically unsaturated groups such as a (meth)acryloyl group, an allyl group, and a vinyl group. As the component (D), compounds commonly used in adhesives, paints, etc. may be used. Specifically, for example, a polyfunctional (meth)acrylate having two or more functionalities (a polyfunctional (meth)acrylate compound) or the like may be used as component (D). These components (D) may be used alone or in combination of two or more. Incidentally, in the case where the electrically conductive resin composition contains two or more types of components (D), the content of components (D) means the total thereof. In particular, from the viewpoint of obtaining an electrically conductive resin composition that cures at normal temperature and has excellent electrical conductivity more easily, component (D) preferably contains a trifunctional or higher functional (meth)acrylate. Component (D) is more preferably a (meth)acrylate having an aliphatic hydrocarbon skeleton, and most preferably trimethylolpropane tri(meth)acrylate. Further, the adhesion imparting agent described below is not included in component (D) and is treated as an optional component.

Note that in the present specification, an acryloyl group and a methacryloyl group are collectively referred to as a (meth)acryloyl group. Moreover, in the present specification, (meth)acrylate means both acrylate and methacrylate. Compounds including (meth) such as (meth)acrylic acid are also a general term for compounds having "meth" in the names and compounds not having "meth" in the names.

Examples of bifunctional (meth)acrylate include ethylene glycol di(meth)acrylate, diethylene glycol di(meth)acrylate, triethylene glycol di(meth)acrylate, tetraethylene glycol di(meth)acrylate, 1,6-hexanediol di(meth)acrylate, 1,9-nonanediol di(meth)acrylate, glycerol di(meth)acrylate, neopentyl glycol di(meth)acrylate, stearic acid-modified pentaerythritol di(meth)acrylate, dicyclopentenyl di(meth)acrylate, di(meth)acryloyl isocyanurate, alkylene oxide-modified bisphenol di(meth)acrylate, epoxy di(meth)acrylate, urethane di(meth)acrylate, polyisobutylene di(meth)acrylate, and di(meth) acryloyl group-containing acrylic polymers, though not particularly limited thereto. Among these, the bifunctional (meth)acrylate is preferably epoxy di(meth)acrylate or urethane di (meth)acrylate. Examples of the urethane di(meth)acrylate include urethane di(meth)acrylate with a polybutadiene skeleton, urethane di(meth)acrylate with a hydrogenated polybutadiene skeleton, urethane di(meth)acrylate with a polycarbonate skeleton, urethane di(meth)acrylate with a polyether skeleton, and urethane di(meth)acrylate with a polyester skeleton, though not particularly limited thereto. These bifunctional (meth)acrylates may be used alone or in combination of two or more types.

Examples of trifunctional (meth)acrylates include trimethylolpropane tri(meth)acrylate, pentaerythritol tri(meth)acrylate, and tris(acryloyloxyethyl) isocyanurate, though not particularly limited. These trifunctional (meth)acrylates may be used alone or in combination of two or more.

Examples of tetrafunctional or more functional (meth)acrylate include ditrimethylolpropane tetra(meth)acrylate, pentaerythritol tetra(meth)acrylate, dipentaerythritol monohydroxy penta(meth)acrylate, alkyl-modified dipentaerythritol penta(meth)acrylate, dipentaerythritol hexa(meth)acrylate, urethane tetra(meth)acrylate, and urethane hexa(meth)acrylate, though not limited thereto. Among these, the tetrafunctional or more functional (meth)acrylate is preferably dipentaerythritol hexa(meth)acrylate. The tetrafunctional or more functional (meth)acrylates may be used alone, or two or more types may be used in combination.

Examples of commercial products of the component (D) include NK ester A-NPG, 701A, A-200, A-DCP, ABE-10, A-TMPT, A-9300, A-TMM-3, A-TMMT, AD-TMP, A-DPH, A-9550, TPOA-50, NPG, 701, 14G, 23G, DCP, TMPT and BPE-80N manufactured by Shin-Nakamura Chemical Co., Ltd., and KAYARAD DPHA manufactured by Nippon Kayaku Co., Ltd, though not limited thereto. These may be used alone or in combination of two or more.

The amount of the component (D) added (amount contained, content) is preferably 1 to 50 parts by mass, more preferably 2 to 40 parts by mass, and particularly preferably 3 to 30 parts by mass relative to 100 parts by mass of component (A), though not particularly limited. With an amount added in the range, an electrically conductive resin composition that cures at normal temperature and has excellent electrically conductivity can be obtained more easily. Further, the content of the component (D) is preferably 1 to 50 parts by mass, more preferably 2 to 40 parts by mass, and particularly preferably 3 to 30 parts by mass relative to 100 parts by mass of the component (C). With a content in the range, an electrically conductive resin composition that cures at normal temperature and has excellent electrical conductivity can be obtained more easily.

### <Optional components>

In the electrically conductive resin composition of the present invention, additives such as an electrically conductive filler that is not component (B) of the present invention, a monofunctional radically polymerizable compound, an electrically non-conductive filler, an adhesion imparting agent, a curing accelerator, a storage stabilizer, an antioxidant, a light stabilizer, a plasticizer, a pigment, a flame retardant, and a surfactant may be used within a range not impairing the purpose of the present invention. Note that the electrically conductive resin composition of the present invention preferably contains no organic peroxide or no photoradical polymerization initiator from the viewpoint of storage stability.

In the electrically conductive filler that is not component (B) of the present invention, materials of particles, shapes of particles, etc. are not limited, as long as the electrical conductivity is exhibited. Examples of the electrically conductive filler that is not component (B) include metal particles composed of one or more metals selected from gold, silver, copper, nickel, palladium, platinum, tin, bismuth and iron, an alloy of combination of multiple types of the metals such as solder, organic polymer particles, and plated particles composed of metal particles coated with thin film of another metal. These electrically conductive fillers that are not component (B) may be used alone or in combination of two or more. Examples of the shape of the electrically conductive filler that is not component (B) include spherical, amorphous, flake-like (scaly), platelike, filament-like, and dendritic shapes (excluding spike shapes). These may be used alone or in combination of two or more. Further, the electrically conductive filler that is not component (B) may be surface-treated with a lubricant. As the lubricant, a saturated fatty acid and/or an unsaturated fatty acid may be used. Examples of the lubricant include capric acid, undecylic acid, lauric acid, tridecylic acid, myristic acid, pentadecylic acid, palmitic acid, margaric acid, stearic acid, linolenic acid, linoleic acid, palmitoleic acid and oleic acid. These lubricants may be used alone or in combination of two or more.

An electrically non-conductive filler in an amount not impairing storage stability may be added to the electrically conductive resin composition of the present invention for the purpose of improving the elastic modulus, fluidity, etc. of the cured product. Specific examples of the electrically non-conductive filler include glass, fumed silica, alumina, mica, ceramics, silicone rubber powder, calcium carbonate, aluminum nitride, carbon powder, kaolin clay, dry clay minerals, and dry diatomaceous earth. The amount of the electrically non-conductive filler blended (content) is preferably about 0.1 to 100 parts by mass based on 100 parts by mass of the component (A).

Fumed silica may be blended for the purpose of adjusting the viscosity of the electrically conductive resin composition of the present invention or improving the mechanical strength of the cured product of the present invention. As the fumed silica, preferably ones hydrophobically treated with organochlorosilanes, polyorganosiloxane, hexamethyldisilazane or the like may be used. Specific examples of fumed silica include commercially available products such as Aerosil R974, R972, R972V, R972CF, R805, R812, R812S, R816, R8200, RY200, RX200, RY200S and R202 manufactured by Nippon Aerosil Co., Ltd.

An adhesion imparting agent may be added to the electrically conductive resin composition of the present invention. Examples of the adhesion imparting agent include an aluminate coupling agent, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, methacryloxyoctyltrimethoxysilane, vinyltrimethoxysilane, vinyltrichlorosilane, vinyltriethoxysilane, vinyl-tris(β-methoxyethoxy)silane, γ-chloropropyltrimethoxysilane, β-(3,4-epoxycyclohexyl)ethyltrimethoxysilane, γ-glycidoxypropyltrimethoxysilane, γ-mercaptopropyltrimethoxysilane, γ-aminopropyltriethoxysilane, N-β- (aminoethyl) -γ-aminopropyltrimethoxysilane, N-β-(aminoethyl) -γ-aminopropylmethyldimethoxysilane, γ-ureidopropyltriethoxysilane, hydroxyethyl methacrylate phosphate, methacryloxyoxyethyl acid phosphate, methacryloxyoxyethyl acid phosphate monoethylamine half salt, and 2-hydroxyethyl methacrylate phosphate. The content of the adhesion imparting agent is preferably 0.05 to 30 parts by mass, more preferably 1 to 15 parts by mass, and particularly preferably 3 to 10 parts by mass relative to 100 parts by mass of component (A).

### <Production method>

The electrically conductive resin composition of the present invention may be produced by a conventionally known method. For example, production may be performed by blending components (A) to (C), component (D) on an as needed basis, and optional components in predetermined amounts, and mixing the mixture with mixing means such as a mixer at a temperature of preferably 10 to 70°C, for preferably 0.1 to 5 hours.

### <Two-component electrically conductive resin composition>

In one embodiment, the electrically conductive resin composition of the present invention is a two-component electrically conductive resin composition containing agent A and agent B. Agent A is a composition containing the component (A) and the component (B), and agent B is a composition containing the component (C). Preferably, agent A is a composition containing the component (A) and the component (B), and agent B is a composition containing the component (C) and the component (B). By dividing the components into separate liquids in this manner, unnecessary reactions are suppressed during storage, so that storage stability can be improved. For such a two-component electrically conductive resin composition also, agent A and agent B may be produced by mixing the respective components based on a well-known method. At the point of use, agent A and agent B are mixed together for use. The content of agent B is 5 to 300 parts by mass, more preferably 10 to 200 parts by mass, and particularly preferably 20 to 150 parts by mass relative to 100 parts by mass of agent A. The agent A and the agent B are mixed and stirred before use, so that a cured product can be obtained.

The two-component electrically conductive resin composition according to an embodiment of the present invention may contain the component (B) in both agent A and agent B. In that case, the mass ratio of component (B) contained in agent A to component (B) contained in agent B is preferably 90:10 to 10:90, more preferably 80:20 to 25:75, and most preferably 75:25 to 40:60. With a mass ratio in the range of 90:10 to 10:90, workability when mixing the two liquids is excellent and a cured product having excellent electrical conductivity can be obtained.

In the case where the two-component electrically conductive resin composition according to an embodiment of the present invention contains the component (D), the component (D) is contained preferably at least in agent A, and more preferably only in agent A. In the case where component (D) is contained in agent A, curing at normal temperature can be performed more easily.

The agent A is a composition containing component (A) and component (B), and the amount (content) of component (B) contained is preferably 100 to 1000 parts by mass, more preferably 200 to 700 parts by mass, and most preferably 300 to 500 parts by mass relative to 100 parts by mass of component (A). In the case where component (D) is contained, it is preferable that relative to 100 parts by mass of component (A), the amount (content) of component (B) contained be 100 to 1000 parts by mass, and the amount (content) of component (D) contained be 1 to 50 parts by mass, more preferable that the amount (content) of component (B) contained be 200 to 700 parts by mass, and the amount (content) of component (D) contained be 2 to 40 parts by mass, and most preferable that the amount (content) of component (B) contained be 300 to 500 parts by mass, and the amount (content) of component (D) contained be 3 to 30 parts by mass.

The agent B is a composition containing component (C) and, on an as-needed basis, component (B). The amount (content) of component (B) contained is preferably 100 to 1000 parts by mass, more preferably 200 to 700 parts by mass, and most preferably 300 to 500 parts by mass, relative to 100 parts by mass of component (C).

### <Curing method and cured product>

A cured product obtained by curing the electrically conductive resin composition of the present invention is also in an aspect of the present invention. Further, the curing conditions for the electrically conductive resin composition include, for example, a temperature of 5 to 50°C, though not particularly limited thereto. The curing time is preferably 1 hour to 20 days, more preferably 6 hours to 10 days, particularly preferably 12 hours to 5 days, though not particularly limited thereto. Further, a cured product obtained by curing the two-component electrically conductive resin composition according to an embodiment of the present invention is also in an aspect of the invention. Curing by mixing two liquids means that curing can be performed by mixing two liquids when used. Further, the curing conditions for the two-component electrically conductive resin composition include, for example, a temperature of 5 to 50°C, though not particularly limited thereto. The curing time is preferably 1 hour to 20 days, more preferably 6 hours to 10 days, and particularly preferably 12 hours to 5 days, though not particularly limited thereto. Note that the electrically conductive resin composition of the present invention may be cured in one layer by heating at 50 to 150°C.

### <Application method>

Examples of methods for applying the electrically conductive resin composition of the present invention to an adherend include dispensing using an automatic coating machine, spraying, ink jetting, screen printing, gravure printing, dipping, and spin coating. Note that the electrically conductive resin composition of the present invention is preferably in a liquid state at 25°C from the viewpoint of coatability.

### <Use>

The electrically conductive resin composition of the present invention cures at normal temperature (5 to 50°C) and a cured product excellent in electrical conductivity can be obtained therefrom, being usable as electrically conductive adhesives, grounding, etc. required around liquid crystal image display devices, organic EL devices, solar cell devices, camera modules, flexible printed circuit boards, wearables, battery packs, etc.

### EXAMPLES

The embodiment of the present invention will be described in more detail with reference to Example as follows. However, the present invention is not limited to the following Examples. Note that unless otherwise specified, operations and tests were conducted in an environment at 25°C and 55% RH.

### <Preparation of electrically conductive resin composition>

The respective components in parts by mass shown in Table 1 were collected and mixed in a mixer at normal temperature for 60 minutes to prepare agent A and agent B contained in the electrically conductive resin composition, respectively. The detailed preparation amounts are shown in Table 1, and all numerical values are expressed in parts by mass. Hereinafter, the electrically conductive resin composition is also simply referred to as a "composition", and the cured product obtained by curing the composition is also simply referred to as a "cured product".

### <Component (A)>

a1-1: bifunctional bisphenol A type epoxy resin (in liquid state (viscosity (25°C): 13 Pa·s) jER828 manufactured by Mitsubishi Chemical Corporation)
a1-2: bifunctional bisphenol A type epoxy resin (in liquid state (viscosity (25°C): 10 Pa·s) jER827 manufactured by Mitsubishi Chemical Corporation)
a1-3: bifunctional bisphenol F type epoxy resin (in liquid state (viscosity (25°C): 2 Pa·s) jER806 manufactured by Mitsubishi Chemical Corporation)
a1-4: bifunctional glycidylamine resin (N,N-bis(2,3-epoxypropyl) -o-toluidine, in liquid state (viscosity (25°C): 50 mPa·s) GOT manufactured by Nippon Kayaku Co., Ltd.)
a2-1: trifunctional glycidylamine resin (triglycidyl-p-aminophenol, in liquid state (viscosity (25°C): 750 mPa·s) jER630 manufactured by Mitsubishi Chemical Corporation)

### <Component (B) and comparative components>

b1: spike-shaped nickel filler with average particle size of 3.7 µm and apparent density of 2.1 g/cm³ (Ni powder type 123 manufactured by Vale)
b'1: filamentary nickel filler with an average particle size of 2.5 µm and an apparent density of 0.58 g/cm³ (Ni powder type 255 manufactured by Vale)
b'2: flaky nickel filler with an average particle size of 15 µm and an apparent density of 1.1 g/cm³ (Ni powder type HCA-1 manufactured by Vale)
b'3: spherical nickel filler with average particle size of 19 µm and apparent density of 4.2 g/cm³ (Ni powder type SNP+20 manufactured by Vale)

### <Component (C)>

c1: modified alicyclic polyamine (amine value: 405 KOHmg/g, in liquid state (viscosity (25°C): 200 mPa·s) Fujicure 8121 manufactured by T&K TOKA Co., Ltd.)
c2: Modified aliphatic polyamine (amine value: 420 KOHmg/g, in liquid state (viscosity (25°C): 400 mPa·s)EH-451N manufactured by ADEKA Corporation)
c3: polyamide amine (amine value: 390 KOHmg/g, in liquid state (viscosity (25°C): 13 Pa·s) Tohmide 235-A manufactured by T&K TOKA Co., Ltd.)
c4: polyamide amine (amine value: 410 KOHmg/g, in liquid state (viscosity (25°C): 3 Pa·s) Tohmide 235-R manufactured by T&K TOKA Co., Ltd.)
c5: amino group-terminated butadiene/acrylonitrile copolymer (amine value: 62000 KOHmg/g, in liquid state (viscosity (25°C): 200 Pa·s) Hypro ATBN 1300X16 manufactured by Huntsman Corporation)
c6: tertiary amine (tris-2,4,6-dimethylaminomethylphenol, in liquid state (viscosity (25°C): 200 mPa·s)Ancamine K-54 manufactured by EVONIC Industries)

### <Component (D)>

d1: polyfunctional radically polymerizable compound (trimethylolpropane triacrylate, NK Ester A-TMPT manufactured by Shin-Nakamura Chemical Co., Ltd.).

The test methods used in Examples and Comparative Examples in Table 1 are as follows.

### <Connection resistance measurement>

Agent A and agent B in Examples and Comparative Examples shown in Table 1 were prepared, and 100 parts by mass of Agent A was mixed with 100 parts by mass of Agent B to prepare a composition. Next, a masking tape was attached to an aluminum plate having a width of 25 mm, a length of 100 mm, and a thickness of 1.6 mm, such that an area with a width of 10 mm, a length of 50 mm and a thickness of 250 µm was exposed. Then, the composition was applied with a squeegee. Then, the masking tape was peeled off, a spacer with a thickness of 200 µm was sandwiched, and an aluminum plate to which no composition was applied was adhered from above. The periphery of the adhesive site was pinched at four locations, left undisturbed in an environment at 25°C for 24 hours, and then the pinches were removed, so that a test piece for use was obtained. Three of the test pieces were made, and the resistance was measured by contacting the upper and lower aluminum plates with needle electrodes of a dual display multimeter, respectively. The measurement values were averaged to define "Connection resistance value after 24 hours (Ω)".

The above operation was repeated, and the resistance measured after 48 hours with a pinch removed was defined as the "Connection resistance value after 48 hours (Ω) ". In the present specification, the connection resistance value after 24 hours is preferably 100 Ω or less, more preferably 50 Ω or less, and particularly preferably 30 Ω or less. The connection resistance value after 48 hours is preferably 10 Ω or less, more preferably 1 Ω or less, and particularly preferably 0.5 Ω or less. Here, insulation is the upper limit of measurement for the dual display multimeter, and indicates that the measurement was unmeasurable. Note that the connection resistance value is a pseudo measurement value generated between a cured product and an adherend, and is different from the volume resistivity, which is the resistance value of a simple substance of cured product.

**[Table 1]**

| | | Example 1 | Example 2 | Example 3 | Example 4 | Comparative Example 1 | Comparative Example 2 | Comparative Example 3 |
|---|---|---|---|---|---|---|---|---|
| Agent A | a1-1 | | 30 | | | 30 | 30 | 30 |
| | a1-2 | 15 | | 35 | 35 | | | |
| | a1-3 | 15 | | 35 | 35 | | | |
| | a1-4 | 30 | 30 | 30 | 30 | 30 | 30 | 30 |
| | a2-1 | 40 | 40 | | | 40 | 40 | 40 |
| | d1 | | | | 10 | | | |
| | b1 | 390 | 400 | 390 | 345 | | | |
| | b'1 | | | | | 260 | | |
| | b'2 | | | | | | 260 | |
| | b'3 | | | | | | | 780 |
| Agent B | c1 | 25 | | 25 | | | | |
| | c2 | 25 | 40 | 25 | | 40 | 40 | 40 |
| | c3 | | 10 | | | 10 | 10 | 10 |
| | c4 | | | | 65 | | | |
| | c5 | | | | 35 | | | |
| | c6 | 2.6 | 25 | 2.5 | 5 | 2.5 | 2.5 | 2.5 |
| | b1 | 190 | 180 | 190 | 340 | | | |
| | b'1 | | | | | 230 | | |
| | b'2 | | | | | | 230 | |
| | b'3 | | | | | | | 690 |
| Connection resistance value after 24 hours [Ω] | | 0.2 | 35.7 | 0.2 | 0.2 | 373.0 | 3433.0 | Insulation |
| Connection resistance value after 48 hours [Ω] | | 0.2 | 0.1 | 0.2 | 0.1 | 62.0 | 977.0 | Insulation |

Examples 1 to 4 in Table 1 each used the same component (B) with the types of component (A) and component (C) changed. As shown in Table 1, it can be seen that the compositions in Examples 1 to 4 cured at normal temperature, and the cured products had excellent electrical conductivity. On the other hand, in Comparative Example 1, a filamentary nickel filler was used instead of component (B) in Example 2, and it can be seen that the connection resistance values after 24 hours and 48 hours were high. Further, in Comparative Example 2, a flaky nickel filler was used instead of component (B) of Example 2, and it can be seen that the connection resistance values after 24 hours and 48 hours were high. Furthermore, in Comparative Example 3, a spherical nickel filler was used instead of component (B) in Example 2, and it can be seen that the connection resistance values after 24 and 48 hours were high and exceeded the upper limit of measurement of the dual display multimeter.

### INDUSTRIAL APPLICABILITY

Since an electrically conductive resin composition of the present invention cures at normal temperature and has excellent electrical conductivity, it can be effectively used for various electrically conductive paste applications to achieve industrial applicability.

The present application is based on Japanese Patent Application No. 2022-095628 filed on June 14, 2022, and the disclosure of which are incorporated herein by reference in its entirety.

## Claims

1. An electrically conductive resin composition comprising: an epoxy resin as component (A); a spike-shaped electrically conductive filler as component (B); and a curing agent for epoxy resin as component (C).

2. The electrically conductive resin composition according to claim 1, wherein the composition consists of the following agent A and agent B:
agent A: a composition containing the epoxy resin as component (A) and the spike-shaped electrically conductive filler as component (B); and
agent B: a composition containing the curing agent for epoxy resin as component (C).

3. The electrically conductive resin composition according to claim 1 or 2, wherein the component (B) is a spike-shaped nickel filler.

4. The electrically conductive resin composition according to claim 1 or 2, wherein the component (A) contains at least a glycidylamine resin.

5. The electrically conductive resin composition according to claim 1 or 2, further comprising a polyfunctional radically polymerizable compound as component (D) .

6. The electrically conductive resin composition according to claim 1 or 2, wherein the component (C) is in a liquid state at 25°C.

7. The electrically conductive resin composition according to claim 1 or 2, comprising no peroxide.

8. The electrically conductive resin composition according to claim 1 or 2, wherein 100 to 1000 parts by mass of the component (B) is comprised relative to 100 parts by mass of the component (A).

9. A cured product obtained by curing the electrically conductive resin composition according to claim 1 or 2.
